# EUROPÄISCHE PATENTSCHRIFT

(11) **EP 2 085 298 B1**
(45) Veröffentlichungstag und Bekanntmachung des Hinweises auf die Patenterteilung: **02.03.2011**
(21) Anmeldenummer: 09005858.7
(22) Anmeldetag: 09.05.2006
(51) Int. Cl.: B62D 35/00, B62D 37/02

(54) **Kraftfahrzeug mit einer Luftleitvorrichtung**
Air flow guiding device for a vehicle
Déflecteur aérodynamique pour un véhicule

(30) Priorität: 29.06.2005 DE 102005030203
(43) Veröffentlichungstag der Anmeldung: 05.08.2009
(62) Teilanmeldung aus: 06009497.6
(73) Patentinhaber: Dr. Ing. h.c. F. Porsche AG, 70435 Stuttgart (DE)
(72) Erfinder: Larson, Grant, 71642 Ludwigsburg (DE)

(56) Entgegenhaltungen:
- DE-A1- 19 741 321
- DE-A1-102004 030 571
- US-A1- 667 265
- US-A1- 4 925 236

## Beschreibung

Die Erfindung betrifft ein Kraftfahrzeug mit einer Luftleitvorrichtung für ein Fahrzeug, insbesondere Personenwagen, gemäß dem Oberbegriff des Patentanspruchs 1.

Aus der US 4,925,236 ist ein Kraftfahrzeug mit einer Luftleitvorrichtung gemäß dem Oberbegriff des Anspruchs 1 bekannt, wobei die Luftleitvorrichtung in einem Heckbereich des Fahrzeugs angeordnet ist. Die Luftleitvorrichtung weist seitliche außenliegende Luftleitelemente auf, welche von einer Ruhestellung in eine ausgefahrene Betriebsstellung verlagerbar sind. Außerdem besitzt die bekannte Luftleitvorrichtung noch ein weiteres Luftleitelement, welches als feststehendes Mittelteil auf dem Heckdeckel angeordnet ist. Die beiden bewegbaren Luftleitelemente sind seitlich außen benachbart zu dem feststehenden Mittelteil, das als Heckspoiler ausgebildet ist, angebracht. Die seitlich außenliegenden Luftleitelemente können - während das Mittelteil unbeweglich, also feststehend ist - von einer eingefahrenen Ruhestellung in eine ausgefahrene Betriebsstellung gedreht werden.

Aus der DE 30 19 150 C2 geht eine Luftleitvorrichtung für ein Fahrzeug, insbesondere Personenwagen hervor, die in einem oben liegenden Heckbereich des Fahrzeuges angeordnet ist und ein Luftleitelement umfasst, das von einer Ruhestellung, in der es oberflächenbündig in den Formverlauf des Heckbereichs integriert ist, in eine ausgefahrene Betriebsstellung verlagerbar ist.

Das Luftleitelement wird bei dieser Anordnung durch einen umgekehrten einstückigen Tragflügel gebildet, der mittels einer Betätigungseinrichtung von der Ruhestellung in die Betriebsstellung bewegbar ist und umgekehrt.

Die DE 43 05 090 C2 offenbart eine Luftleitvorrichtung für ein Fahrzeug, die in einem Heckbereich des Fahrzeugs angeordnet ist und ein Luftleitelement umfasst, das von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von einer eingefahrenen Ruhestellung, in der er etwa oberflächenbündig mit der angrenzenden Fahrzeugkarosserie verläuft, in eine ausgefahrene Betriebsstellung verlagerbar ist.

Das einteilig ausgebildete Luftleitelement weist in der Ruhestellung und in der ausgefahrenen Betriebsstellung jeweils dieselbe Quererstreckung auf. Mit den eingangs beschriebenen Luftleitvorrichtungen wird der Luftwiderstandsbeiwert des Fahrzeuges (cw-Wert) verbessert und ein Abtrieb an der Hinterachse erzeugt.

Aufgabe der Erfindung ist es, ein Kraftfahrzeug mit einer Luftleitvorrichtung der eingangs genannten Gattung so weiterzubilden, dass die aerodynamischen Eigenschaften des Fahrzeuges, insbesondere der Abtrieb an der Hinterachse, noch weiter verbessert wird.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Vergrößerung des Luftleitelements in Fahrzeugquerrichtung die wirksame aerodynamische Anströmfläche in der Betriebsstellung D vergrößert wird, wodurch insbesondere der Abtrieb des Fahrzeuges an der Hinterachse im Fahrbetrieb weiter erhöht wird. Das Luftleitelement erstreckt sich in der Betriebsstellung D nun auch beiderseits des mittigen Karosserieteils im Bereich der Seitenteile bzw. Kotflügel des Fahrzeuges.

Die Zeichnung zeigt ein Ausführungsbeispiel der Erfindung, das im folgenden näher beschrieben wird.

Es zeigt
- Fig. 1: eine perspektivische Ansicht von schräg vorne auf einen Heckbereich eines Fahrzeuges mit einer Luftleitvorrichtung, wobei ein Luftleitelement eine eingefahrene Ruhestellung A einnimmt,
- Fig. 2: eine Ansicht entsprechend Fig. 1, wobei das Luftleitelement eine hochgeschwenkte Zwischenstellung B einnimmt,
- Fig. 3: ein Ansicht entsprechend Fig. 2, wobei das Luftleitelement eine teilweise ausgefahrene Zwischenstellung C in Querrichtung einnimmt,
- Fig. 4: eine Ansicht entsprechend Fig. 2 in der vollständig ausgefahrenen Betriebsstellung D des Luftleitelements.

Ein Personenwagen 1 umfasst einen Aufbau 2, der im dargestellten Heckbereich 3 eine großflächige Scheibe 4 und ein dahinter liegend angeordnetes Karosserieteil 5 aufweist. Die Heckscheibe 4 und das Karosserieteil 5 sind an beiden Längsseiten 6 jeweils durch ein hinteres Seitenteil 7 begrenzt, an dem ein Fondseitenfenster 8 vorgesehen ist. An das hintere Ende 9 des Seitenteiles 7 schließt sich eine quer verlaufende Leuchteneinheit 10 an. Das Karosserieteil 5 und die Heckscheibe 4 können getrennt voneinander ausgebildet sein; sie können jedoch auch zu einer gemeinsamen Baueinheit zusammengefasst sein, die beispielsweise schwenkbar am Aufbau 2 gelagert ist. Im Ausführungsbeispiel wird das Karosserieteil 5 durch einen heckseitigen Motordeckel gebildet.

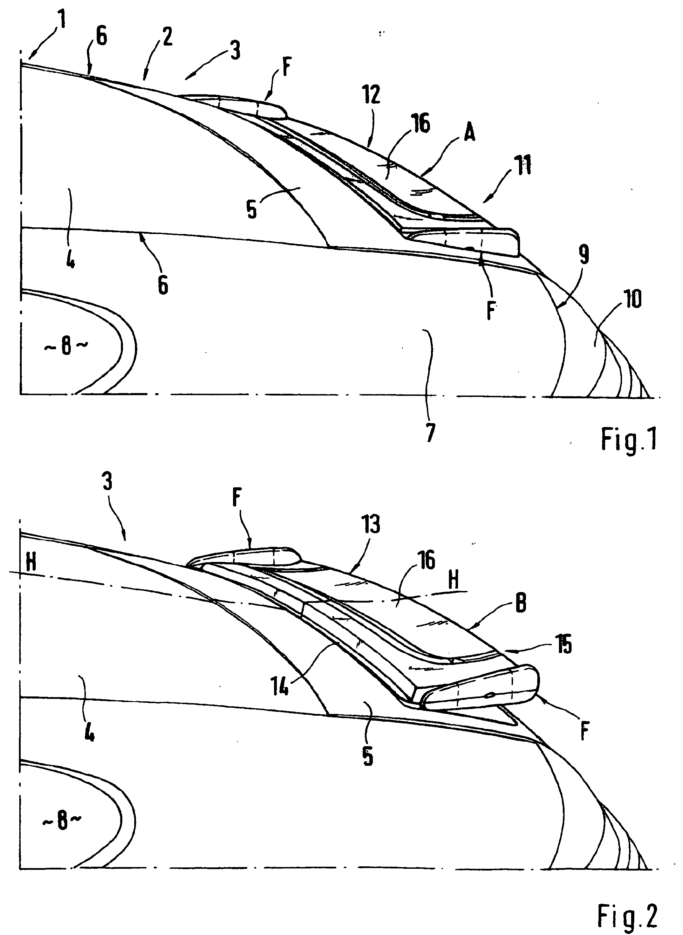

Am heckseitigen Karosserieteil 5 des fließheckartig ausgebildeten Heckbereichs 3 ist eine Luftleitvorrichtung 11 vorgesehen, die ein mit einer nicht näher dargestellten Betätigungseinrichtung zusammenwirkendes Luftleitelement 12 umfasst. Das Luftleitelement 12 ist von einer Ruhestellung A, in der es in den Formverlauf des Heckbereichs 3 etwa oberflächenbündig integriert ist, mittels der Betätigungseinrichtung über Zwischenstellungen B, C in eine ausgefahrene Betriebsstellung D verlagerbar und umgekehrt. In der Ruhestellung A ist das Luftleitelement 12 in einer versenkten Aufnahme des heckseitigen Karosserieteils 5 aufgenommen, wobei die Oberseite des Luftleitelements 12 etwa oberflächenbündig mit der angrenzenden Aufbaukontur verläuft. Das Luftleitelement 12 wird im Ausführungsbeispiel durch einen ausschwenkbaren Heckspoiler 13 gebildet, der an seinem vorne liegenden Ende 14 unter Vermittlung zumindest eines nicht näher dargestellten Scharniers gelenkig mit dem angrenzenden Karosserieteil 5 verbunden ist. Das hintere Ende 15 des Heckspoilers 13 wird beim Ausfahren der Luftleitvorrichtung 1 nach oben geschwenkt (Fig. 2).

Das verlagerbare Luftleitelement 12 könnte jedoch auch durch ein umgekehrtes Tragflügelprofil gebildet werden (nicht näher dargestellt).

Es ist vorgesehen, dass die Luftleitvorrichtung 11 in der ausgefahrenen Betriebsstellung D eine größere Quererstreckung aufweist als in der eingefahrenen Ruhestellung A. Erzielt wird dies dadurch, dass das verlagerbare Luftleitelement 12 - in Fahrzeugquerrichtung E-E gesehen - mehrteilig ausgebildet ist, wobei zumindest einzelne Teile der Luftleitvorrichtung 12 in Fahrzeugquerrichtung E-E bewegbar ausgebildet sind.

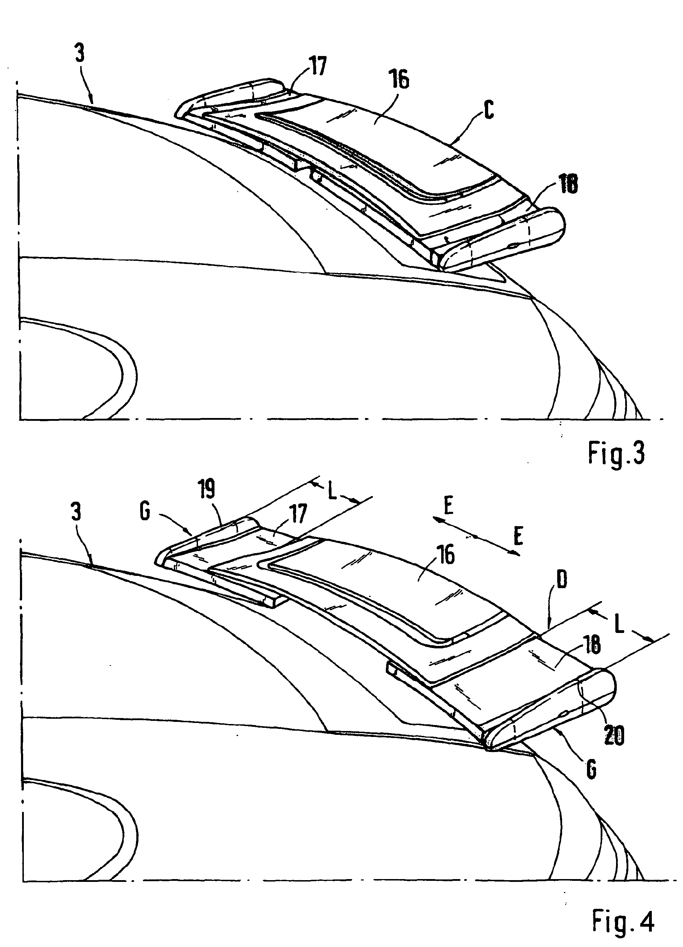

Die Luftleitvorrichtung weist ein relativ breites Mittelteil 16 und zwei deutlich schmälere seitlich außenliegende Verlängerungsteile 17, 18 auf, wobei die beiden seitlichen Verlängerungsteile 17, 18 gegenüber dem Mittelteil 16 in Fahrzeugquerrichtung E-E bewegbar sind. Die beiden seitlichen Verlängerungsteile 17, 18 sind in der eingefahrenen Ruhestellung A des Luftleitelements 12 zumindest bereichsweise in das breitere Mittelteil 16 eingeschoben. Im Ausführungsbeispiel weisen die seitlichen Verlängerungsteile 17, 18 an ihren äußeren Enden jeweils in Fahrzeuglängsrichtung verlaufende aufrecht ausgerichtete Begrenzungsstege 19, 20 auf, die die Oberseite des Heckspoilers 13 nach oben hin überragen. Die seitlichen Verlängerungsteile 17, 18 sind über eine teleskopartige Schiebebewegung oder eine Klappbewegung von ihrer eingefahrenen Endstellung F (Fig. 1 u. 2) in ihre ausgefahrene Endstellung G (Fig. 4) verlagerbar und zwar über eine nicht näher dargestellte Antriebseinrichtung. Erfindungsgemäß erfolgt die Verstellbewegung der seitlichen Verlängerungsteile 17, 18 in Fahrzeugquerrichtung erst dann, wenn das komplette Luftleitelement 12 von der eingefahrenen Ruhestellung A in eine angehobene Zwischenstellung B bewegt wurde. In Fig. 3 sind die seitlichen Verlängerungsteile 17, 18 teilweise ausgefahren, wogegen Fig. 4 die vollständig ausgefahrene Betriebsstellung D des Luftleitelements 12 zeigt, d.h., die seitlichen Verlängerungsteile 17, 18 sind nun vollständig in Fahrzeugquerrichtung E-E ausgefahren und die Luftleitvorrichtung 11 weist eine größere Quererstreckung auf.

Die zweite Ausfahrbewegung des Luftleitelements 12 in Fahrzeugquerrichtung E-E kann elektromotorisch, pneumatisch, hydraulisch oder dergleichen erfolgen. In der Ruhestellung A sind die beiden schmalen seitlichen Verlängerungsteile 17, 18 nahezu vollständig in das breitere Mittelteil 16 eingeschoben; lediglich die beiden aufrechten längsgerichteten Begrenzungsstege 19, 20 befinden sich außerhalb des Mittelteiles 16. Es müssen jedoch keine Begrenzungsstege 19, 20 an den Verlängerungsteilen 17, 18 vorgesehen sein.

Gemäß einer zweiten, nicht näher dargestellten Ausführungsform umfasst das Luftleitelement 12 zwei Hälften, die in der eingefahrenen Ruhestellung A jeweils bereichsweise über ein zentrales Mittelteil geschoben sind und im Bereich einer Fahrzeugmittellängsebene H-H aneinander anliegen. In der vollständig ausgefahrenen Betriebsstellung D erstreckt sich zwischen den auseinander geschobenen Hälften das zentrale Mittelteil.

Am Luftleitelement 12 können örtlich Lufteintrittsöffnungen vorgesehen sein, damit Kühlluft zu einer dahinter liegend angeordneten Brennkraftmaschine geleitet werden kann.

Bei der erfindungsgemäßen Anordnung wird das Luftleitelement 12 über eine erste Verstellbewegung (Verschwenken oder Anheben) von einer außenhautbündigen Ruhestellung A in eine angehobene Zwischenstellung B bewegt, und danach erfolgt eine zweite Verstellbewegung des Luftleitelements 12 in Fahrzeugquerrichtung E-E in die ausgefahrene Betriebsstellung D.

In der ausgefahrenen Betriebsstellung D wird das Luftleitelement 12 durch die beiden seitlichen Verlängerungsteile 17, 18 an beiden Längsseiten jeweils um ein Maß L verbreitert.

## Patentansprüche

1. Kraftfahrzeug mit einer Luftleitvorrichtung (11), insbesondere Personenwagen, die in einem Heckbereich (3) des Fahrzeuges angeordnet ist und ein Luftleitelement (12) umfasst, das von einer Ruhestellung (A) in eine ausgefahrene Betriebsstellung (D) verlagerbar ist, wobei die Luftleitvorrichtung (11) in der ausgefahrenen Betriebsstellung (D) eine größere Quererstreckung aufweist als in der eingefahrenen Ruhestellung (A) und ein Mittelteil (16) und zwei seitlich außenliegende Verlängerungsteile (17, 18) aufweist, **dadurch gekennzeichnet, dass** die Verlängerungsteile (17, 18) gegenüber dem Mittelteil (16) in Fahrzeugquerrichtung (E-E) bewegbar sind, und dass eine Verstellbewegung der seitlichen Verlängerungsteile (17, 18) erfolgt, wenn das komplette Luftleitelement (12) - ausgehend von der eingefahrenen Ruhestellung (A) - eine angehobene Zwischenstellung (B) einnimmt.

2. Kraftfahrzeug mit einer Luftleitvorrichtung nach Anspruch 1, **dadurch gekennzeichnet, dass** in der ausgefahrenen Betriebsstellung (D) das Luffleitelement (12) durch die beiden seitlichen Verlängerungsteile (17, 18) an beiden Längsseiten jeweils um ein Maß (L) verbreitert ist.

3. Kraftfahrzeug mit einer Luftleitvorrichtung nach einem der Ansprüche 1 oder 2, **dadurch gekennzeichnet, dass** in der Betriebsstellung (D) des Luftleitelements (12) die wirksame aerodynamische Anströmfläche vergrößert ist.

4. Kraftfahrzeug mit einer Luftleitvorrichtung nach einem der vorhergehenden Ansprüche, **dadurch gekennzeichnet, dass** es ein mittiges Karosserieteil (5) aufweist, das seitlich von hinteren Seitenteilen (7) begrenzt wird, und dass das Luftleitelement (12) in der Betriebsstellung (D) sich beiderseits des mittigen Karosserieteils (5) im Bereich der Seitenteile (7) erstreckt.

5. Kraftfahrzeug mit einer Luftleitvorrichtung nach Anspruch 1, **dadurch gekennzeichnet, dass** das Luftleitelement (12) durch einen ausschwenkbaren Heckspoiler (13) gebildet ist, dessen hinteres Ende (15) beim Ausfahren nach oben schwenkt.

6. Kraftfahrzeug mit einer Luftleitvorrichtung nach Anspruch 1, **dadurch gekennzeichnet, dass** das verlagerbare Luftleitelement (12) als Tragflügel ausgebildet ist.

## Claims

1. Motor vehicle having an air guiding device (11), in particular passenger car, which air guiding device is arranged in a rear region (3) of the vehicle and comprises an air guiding element (12) which can be moved from a rest position (A) into a deployed operating position (D), with the air guiding device (11) having a greater transverse extent in the deployed operating position (D) than in the retracted rest position (A) and having a central part (16) and two laterally outer extension parts (17, 18), **characterized in that** the extension parts (17, 18) are movable relative to the central part (16) in the vehicle transverse direction (E-E), and **in that** an adjusting movement of the lateral extension parts (17, 18) takes place when the complete air guiding element (12) - proceeding from the retracted rest position (A) - assumes a raised intermediate position (B).

2. Motor vehicle having an air guiding device according to Claim 1, **characterized in that**, in the deployed operating position (D), the air guiding element (12) is widened by the two lateral extension parts (17, 18) at the two longitudinal sides in each case by a dimension (L).

3. Motor vehicle having an air guiding device according to one of Claims 1 and 2, **characterized in that**, in the operating position (D) of the air guiding element (12), the effective aerodynamic incident flow surface is enlarged.

4. Motor vehicle having an air guiding device according to one of the preceding claims, **characterized in that** said motor vehicle has a central body part (5) which is delimited laterally by rear side parts (7), and **in that** the air guiding element (12), in the operating position (D), extends to both sides of the central body part (5) in the region of the side parts (7).

5. Motor vehicle having an air guiding device according to Claim 1, **characterized in that** the air guiding element (12) is formed by a rear spoiler (13) which can be pivoted out and whose rear end (15) pivots upward during the deploying movement.

6. Motor vehicle having an air guiding device according to Claim 1, **characterized in that** the movable air guiding element (12) is designed as an aerofoil.

## Revendications

1. Véhicule automobile avec un déflecteur aérodynamique (11), en particulier voiture automobile, qui est disposé dans une région arrière (3) du véhicule et comprend un élément de déflecteur aérodynamique (12), qui peut être déplacé d'une position de repos (A) à une position de travail sortie (D), dans lequel le déflecteur aérodynamique (11) présente dans la position de travail sortie (D) une plus grande extension transversale que dans la position de repos rentrée (A) et présente une partie centrale (16) et deux parties de prolongement (17, 18) disposées latéralement à l'extérieur, **caractérisé en ce que** les parties de prolongement (17, 18) sont mobiles dans la direction transversale (E-E) du véhicule par rapport à la partie centrale (16), et **en ce qu'**un mouvement de déplacement des parties de prolongement latérales (17, 18) se produit lorsque l'élément de déflecteur aérodynamique complet (12) occupe une position intermédiaire soulevée (B) à partir de la position de repos rentrée (A).

2. Véhicule automobile avec un déflecteur aérodynamique selon la revendication 1, **caractérisé en ce que**, dans la position de travail sortie (D), l'élément de déflecteur aérodynamique (12) est élargi d'une mesure (L) sur chacun des deux côtés longitudinaux au moyen des deux parties de prolongement latérales (17, 18).

3. Véhicule automobile avec un déflecteur aérodynamique selon l'une quelconque des revendications 1 ou 2, **caractérisé en ce que**, dans la position de travail (D) de l'élément de déflecteur aérodynamique (12), la surface de soufflage aérodynamique utile est agrandie.

4. Véhicule automobile avec un déflecteur aérodynamique selon l'une quelconque des revendications précédentes, **caractérisé en ce qu'**il présente une partie de carrosserie centrale (5), qui est limitée latéralement par des parties latérales arrière (7), et **en ce que** l'élément de déflecteur aérodynamique (12) s'étend, dans la position de travail (D), dans la région des parties latérales (7) de part et d'autre de la partie de carrosserie centrale (5).

5. Véhicule automobile avec un déflecteur aérodynamique selon la revendication 1, **caractérisé en ce que** l'élément de déflecteur aérodynamique (12) est formé par un spoiler arrière pivotant (13), dont l'extrémité arrière (15) pivote vers le haut lors de sa sortie.

6. Véhicule automobile avec un déflecteur aérodynamique selon la revendication 1, **caractérisé en ce que** l'élément de déflecteur aérodynamique déplaçable (12) se présente sous la forme d'une aile portante.
